# EUROPÄISCHE PATENTSCHRIFT

(11) **EP 3 260 361 B1**
(45) Veröffentlichungstag und Bekanntmachung des Hinweises auf die Patenterteilung: **18.03.2020**
(21) Anmeldenummer: 17173544.2
(22) Anmeldetag: 30.05.2017
(51) Int. Cl.: B62J 99/00, B62K 25/00, B62K 3/00, B62K 19/30

(54) **KABELFÜHRUNGSKÖRPER**
CABLE GUIDANCE BODY
CORPS DE GUIDE DE CÂBLE

(30) Priorität: 21.06.2016 AT 3002016
(43) Veröffentlichungstag der Anmeldung: 27.12.2017
(73) Patentinhaber: SIMPLON Fahrrad GmbH, 6971 Hard (AT)
(72) Erfinder: Sebal, Rainer, 6850 Dornbirn (AT); Heckmeier, Andreas, 87484 Nesselwang (DE)
(74) Vertreter: Fechner, Thomas

(56) Entgegenhaltungen:
- EP-A1- 0 695 682
- EP-A1- 1 580 104
- EP-A1- 2 406 122
- WO-A1-2009/097731
- WO-A1-2009/111979
- FR-A- 437 272
- JP-A- 2002 205 673
- US-A- 4 325 269
- US-A- 5 391 014

## Beschreibung

Die vorliegende Erfindung betrifft ein Fahrrad mit zumindest zwei Rahmenteilen eines Fahrradrahmens des Fahrrades, wobei eines der Rahmenteile ein Hauptrahmen des Fahrrades und eines der Rahmenteile ein Hinterbau des Fahrrades zur Aufnahme eines Hinterrades des Fahrrades ist, wobei der Hauptrahmen ein Sitzrohr zum Einführen einer Sattelstütze und ein Steuerrohr zum Befestiguen einer Gabel und eines Lenkers am Hauptrahmen aufweist, oder beide Rahmenteile Teile des Hinterbaus des Fahrrades zur Aufnahme des Hinterrades des Fahrrades sind und die Rahmenteile über zumindest eine Schwenkachse zumindest eines Schwenkgelenks des Fahrrades schwenkbar miteinander verbunden sind, wobei das Fahrrad zumindest ein Kabel und zumindest einen Kabelführungskörper zur Befestigung des Kabels an dem Fahrrad aufweist.

Bei Fahrrädern ist es an sich bekannt, Kabel z.B. des Brems-, Schalt- und/oder Beleuchtungssystems an Teilen des Lenkers und des Fahrradrahmens entlang zu führen. Es gibt beim Stand der Technik Lösungen, bei denen Kabel innen im Fahrradrahmen bzw. in dessen Rohren geführt sind. Genauso gut ist es bekannt, Kabel außen am Fahrradrahmen oder an anderen Teilen des Fahrrades zu befestigen. Hierzu können gesonderte Kabelführungskörper wie z.B. Kabelbinder oder dergleichen eingesetzt werden. Es ist auch bekannt, am Fahrradrahmen Kabelführungskörper fix anzuschweißen oder dergleichen.

Problematisch wird die Kabelführung vor allem überall da, wo, z.B. bei voll gefederten Fahrrädern, das Kabel über eine Schwenkachse hinweg geführt werden muss. Auch hier sind sowohl Lösungen, bei denen das Kabel in Rohren des Fahrradrahmens als auch außerhalb des Fahrradrahmens geführt wird, bekannt. Bei all diesen, beim Stand der Technik bekannten, Lösungen hat man aber meist das Problem, dass das Kabel mit der Zeit durch die Schwenkbewegung der beiden über das Schwenkgelenk miteinander verbundenen Fahrradteile abgenützt oder anderweitig beeinträchtigt wird. Die EP 2 406 122 A0 offenbart die Merkmale des Oberbegriffs des Anspruchs 1, und einen rohrförmigen, durch das Sitzrohr hindurchgeführten Kabelführungskörper, welcher sich über eine Schwenkachse hinweg erstreckt und von dieser beabstandet ist.

Aufgabe der Erfindung ist es, bezüglich dieser Problemstellung eine Verbesserung vorzuschlagen.

Dies wird durch ein Fahrrad gemäß Patentanspruch 1 erreicht.

Das erfindungsgemäße Fahrrad erlaubt es, das Kabel über die Schwenkachse zu führen, sodass es beim Verschwenken der beiden Rahmenteile, welche über das Schwenkgelenk miteinander verbunden sind, zu einer möglichst minimalen bzw. zu gar keiner Beeinträchtigung des Kabels kommt. Der Kabelführungskörper ist mit seinem Befestigungsabschnitt an einem Achsbolzen des Schwenkgelenkes befestigt. Man könnte also auch davon sprechen, dass der Befestigungsabschnitt zur Befestigung des Kabelführungskörpers auf der Schwenkachse an dem Achsbolzen vorgesehen ist. Zur Klarstellung wird in diesem Zusammenhang darauf hingewiesen, dass es sich bei der Schwenkachse unabhängig von ihrer konkreten Ausführungsform um die geometrisch Achse handelt, um die die das Schwenkgelenk bildenden Fahrradteile verschwenkt werden können. Der Achsbolzen hingegen ist ein physisch vorhandener Bolzen, welcher die Schwenkachse des Schwenkgelenks physisch ausbildet.

Der Kabelführungskörper weist jedenfalls immer zumindest zwei Teile, nämlich zumindest eine Kabelführungsöse und zumindest einen Befestigungsabschnitt auf. Der Kabelführungskörper kann dabei in bevorzugten Ausgestaltungsformen einstückig, z.B. aus Kunststoff oder Metall gefertigt sein. Es ist aber auch eine mehrteilige Ausführung eines erfindungsgemäßen Kabelführungskörpers denkbar. So können z.B. die Kabelführungsöse und der Befestigungsabschnitt auch zunächst als getrennte Körper hergestellt und dann miteinander verbunden werden. Es kann sich dann dabei um eine starre aber auch um eine gelenkige, insbesondere eine, eine Schwenkbewegung zulassende, Verbindung zwischen Kabelführungsöse und Befestigungsabschnitt handeln. In besonders bevorzugten Ausgestaltungsformen können der gesamte Kabelführungskörper oder alle oder einzelne seiner Bestandteile als Spritzgussteil ausgebildet sein.

Der Begriff des Fahrrades ist hier sehr allgemein aufzufassen. Es kann sich um rein mechanisch angetriebene Fahrräder aber auch um solche Fahrräder mit elektrischem und/oder sonstigem Hilfsmotor handeln. Es kann sich auch um Motorräder, Mopeds oder dergleichen handeln. Das Fahrrad hat in der Regel zwei oder mehr Laufräder.

Auch der Begriff des Kabels ist allgemein aufzufassen. Es kann sich dabei z.B. um ein Kabel zur Übertragung von Schaltbefehlen eines Schaltsystems des Fahrrades und/oder zur Übertragung eines Bremsvorgangs eines Bremssystems des Fahrrades und/oder auch um eine sonstige Signal- oder Stromübertragung z.B. des Beleuchtungssystems des Fahrrades oder von Steuerbefehlen für einen Hilfsmotor oder Motor handeln. Insbesondere kann das Kabel als Bowdenzug, als elektrisches Kabel aber auch als hydraulische oder pneumatische Leitung ausgeführt sein. Der Befestigungsabschnitt kann ein Gewinde aufweisen, um am Achsbolzen befestigt zu werden. Eine von vielen Alternativen hierzu ist, dass der Befestigungsabschnitt zumindest eine Raste zur Ausbildung einer Schnappverbindung mit dem Achsbolzen oder einem anderen Bauteil des Fahrrades aufweist. Natürlich kann der Befestigungsabschnitt grundsätzlich auch andere Befestigungsmittel zur Befestigung des Kabelführungskörpers auf der Schwenkachse umfassen.

Die Kabelführungsöse kann zumindest eine oder genau eine Öffnung zum Hindurchführen des Kabels umfangsgeschlossen umgeben. Um das Kabel aber durch die Kabelführungsöse nicht vollständig hindurchführen zu müssen, kann die Kabelführungsöse auch zumindest einen oder genau einen Einführungsschlitz zum seitlichen Einführen des Kabels in die Öffnung aufweisen. In diesen Fällen ist dann die Kabelführungsöse nicht umfangsgeschlossen ausgebildet.

Bei dem Fahrrad gemäß der Erfindung ist vorgesehen, dass das Kabel in der Kabelführungsöse des Kabelführungskörpers befestigt ist und der Kabelführungskörper samt Kabel mittels des Befestigungsabschnitts des Kabelführungskörpers auf der Schwenkachse an dem Achsbolzen des Schwenkgelenkes befestigt ist. Zu den verschiedenen Möglichkeiten der Befestigung des Kabelführungskörpers mit seinem Befestigungsabschnitt auf der Schwenkachse und auch zur Frage, was alles unter den Begriff des Fahrrades fallen kann, wird auf das oben Gesagte verwiesen. Auf der Schwenkachse befindet sich der Kabelführungskörper immer dann, wenn in der fertig montierten Stellung die Schwenkachse durch den Kabelführungskörper hindurch verläuft. Bei erfindungsgemäßen Fahrrädern ist vorgesehen, dass Rahmenteile eines Fahrradrahmens des Fahrrades über die Schwenkachse schwenkbar miteinander verbunden sind.

Bei dem Fahrradrahmen handelt es sich um den tragenden Teil des Fahrrades, welcher die Laufräder, also bei Fahrrädern mit zwei Laufrädern insbesondere die Vorder- und Hinterräder miteinander verbindet. Der Fahrradrahmen ist in der Regel mehrteilig aufgebaut. Er weist meist einen Hauptrahmen, eine Gabel für das Vorderrad und einen Hinterbau für das Hinterrad auf. Der Hauptrahmen verbindet die anderen Teile, also insbesondere Gabel und Hinterbau des Fahrradrahmens miteinander. Der Hauptrahmen hat eine Befestigungsmöglichkeit für den Sattel und auch für den Lenker des Fahrrades. So weist der Hauptrahmen ein Sitzrohr zum Einführen einer Sattelstütze und ein Steuerrohr zum Befestigen der Gabel und des Lenkers am Hauptrahmen auf.

Der erfindungsgemäße Kabelführungskörper kommt vorzugsweise bei sogenannten voll gefederten Fahrrädern zum Einsatz, bei denen der Hinterbau über zumindest ein Schwenkgelenk relativ zum Hauptrahmen und/oder verschiedene Bauteile des Hinterbaus relativ zueinander über zumindest ein Schwenkgelenk miteinander verschwenkbar verbunden sind. Bei erfindungsgemäßen Fahrrädern ist vorgesehen, dass eines der Rahmenteile ein Hauptrahmen des Fahrrades und eines der Rahmenteile ein Hinterbau des Fahrrades zur Aufnahme eines Hinterrades der Fahrrades ist oder beide Rahmenteile Teile des Hinterbaus des Fahrrades zur Aufnahme des Hinterrades des Fahrrades sind.

In besonders bevorzugten Ausgestaltungsformen ist vorgesehen, dass die Kabelführungsöse nach außen übersteht. Sie ist also nicht innerhalb des Teils angeordnet, an dem der Kabelführungskörper mit dem Befestigungsabschnitt befestigt ist. Es ist vielmehr vorgesehen, dass die Kabelführungsöse nach außen z.B. über den Achsbolzen übersteht, wenn der Kabelführungskörper mit seinem Befestigungsabschnitt am Achsbolzen befestigt ist. Das Gleiche gilt, wenn der Kabelführungskörper an anderen Teilen des Fahrrades z.B. dem Fahrradrahmen befestigt ist. Auch dann ist es günstig, wenn die Kabelführungsöse nach außen übersteht.

Damit das Kabel die Verschwenkbewegung der über das Schwenkgelenk miteinander verbundenen Teile des Fahrrades bzw. der Rahmenteile nicht vollständig mitmachen muss, ist es grundsätzlich günstig, wenn das Kabel mittels des Kabelführungskörpers um die Schwenkachse, um die die beiden Rahmenteile relativ zueinander verschwenkbar sind, verschwenkbar gelagert ist. In anderen Worten ist es also bevorzugt vorgesehen, dass der Kabelführungskörper dreh-, bzw. verschwenkbar am Fahrrad befestigt ist. Hierzu gibt es verschiedene Möglichkeiten. Z.B. kann vorgesehen sein, dass der Kabelführungskörper mit seinem Befestigungsabschnitt um die Schwenkachse, um die die beiden Rahmenteile relativ zueinander verschwenkbar sind, verschwenkbar gelagert ist. In diesen Ausgestaltungsformen ist also der gesamte Kabelführungskörper dreh- bzw. schwenkbar gelagert, indem bereits der Befestigungsabschnitt dreh- oder schwenkbar am Achsbolzen im Bereich der Schwenkachse befestigt ist. Insbesondere in solchen Ausgestaltungsformen kann der Kabelführungskörper in sich starr und/oder als einstückiger Körper ausgebildet sein. Alternativ ist es auch möglich, dass das Kabel in der Kabelführungsöse um die Schwenkachse, um die die beiden Fahrradteile relativ zueinander verschwenkbar sind, verschwenkbar gelagert ist. Solche Ausgestaltungsformen werden z.B. dann zur Verfügung gestellt, wenn die Kabelführungsöse Aufweitungen derart aufweist, dass das Kabel mit Spiel in der Kabelführungsöse gelagert ist. Dies ermöglicht es dann, dass das Kabel in der Kabelführungsöse sich relativ zum Kabelführungskörper bewegt. In solchen Ausgestaltungsformen kann der Kabelführungskörper um die Schwenkachse schwenkbar aber auch starr bezüglich der Schwenkachse befestigt werden. Andere Varianten können vorsehen, dass das Kabel mit der Kabelführungsöse um die Schwenkachse, um die die beiden Fahrradteile relativ zueinander verschwenkbar sind, verschwenkbar gelagert ist. In solchen Ausgestaltungsformen kann z.B. vorgesehen sein, dass die Kabelführungsöse um die Schwenkachse drehbar am Befestigungsabschnitt befestigt ist.

Weitere Merkmale und Einzelheiten bevorzugter Ausgestaltungsformen der Erfindung werden nachfolgend anhand von Ausführungsvarianten veranschaulicht. Es zeigen:
Fig. 1 eine schematisierte Darstellung eines erfindungsgemäßen Fahrrades;
Fig. 2 und 3 Detaildarstellungen zu Fig. 1 im Bereich des Schwenkgelenkes und des Kabelführungskörpers;
Fig. 4 bis 6 Darstellungen einer ersten Ausgestaltungsform eines erfindungsgemäßen Kabelführungskörpers;
Fig. 7 eine hierzu abweichende Variante der Befestigung am Achsbolzen;
Fig. 8 bis 10 eine zweite Ausgestaltungsform eines erfindungsgemäßen Kabelführungskörpers;
Fig. 11 und 12 eine dritte Ausgestaltungsform eines erfindungsgemäßen Kabelführungskörpers und
Fig. 13 und 14 eine vierte Ausgestaltungsform eines erfindungsgemäßen Kabelführungskörpers.

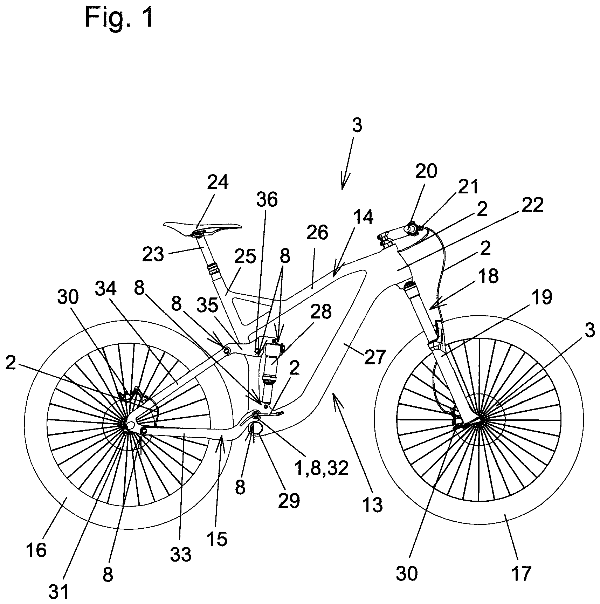

Bei dem in Fig. 1 beispielhaft dargestellten Fahrrad 3 handelt es sich um ein Zweirad in Form eines sogenannten voll gefederten Mountainbikes. Der Fahrradrahmen 13 dieses Fahrrades 3 weist einen Hauptrahmen 14 sowie einen Vorderbau 18 und einen Hinterbau 15 auf. Der Sattel 24 ist mittels der Sattelstütze 23 im Sitzrohr 25 und damit am Hauptrahmen 14 befestigt. Die Gabel 19 des Vorderbaus 18 wie auch der Lenker 20 sind, wie an sich bekannt, im Steuerrohr 22 des Hauptrahmens 14 drehbar gelagert, sodass Lenkbewegungen ausgeführt werden können. Das Vorderrad 17 ist in der Gabel 19 gehalten. Die Gabel 19 kann als an sich bekannte Federgabel ausgeführt sein. Der Hauptrahmen 14 weist neben dem Steuerrohr 22, das Sitzrohr 25, das Oberrohr 26 und das Unterrohr 27 auf. Am Kreuzungspunkt zwischen Unterrohr 27 und Sitzrohr 25 befindet sich das Tretlagergehäuse 29. Das dort normalerweise angeordnete Tretlager samt Kurbel, Pedalen, Zahnkränzen, Kette, wie auch die Schaltwerke sind hier nicht dargestellt. Sie können wie beim Stand der Technik an sich bekannt ausgeführt sein. Der Hinterbau 15, an dem das Hinterrad 16 befestigt ist, umfasst die Kettenstrebe 33, die Sitzstrebe 34, sowie die Wippe 35. Die Kettenstrebe 33 ist über das Schwenkgelenk 8 in Form des sogenannten Hauptlagers 32 schwenkbar am Hauptrahmen 14 befestigt. Die Wippe 35 ist über das als Wippenhauptlager 36 bezeichnete Schwenkgelenk 8 am Sitzrohr 25 und damit ebenfalls am Hauptrahmen 14 schwenkbar gelagert. Im gezeigten
(weiter auf Seite 8 der ursprünglichen Beschreibung)

Ausführungsbeispiel ist die Sitzstrebe 34 sowohl an der Wippe 35 als auch an der Kettenstrebe 33 mittels jeweils eines Schwenkgelenks 8 schwenkbar gelagert. Das Hinterrad 16 samt Hinterbau 15 kann somit relativ zum Hauptrahmen ausgefedert bzw. verschwenkt werden. Diese Schwenkbewegung wird, wie an sich bekannt, mittels der Feder- Dämpfer- Kombination 28 gedämpft.

In der in Fig. 1 gezeigten Seitenansicht auf das Fahrrad 3 verlaufen die Schwenkachsen 6, um die die Schwenkgelenke 8 geschwenkt werden können, jeweils horizontal bzw. normal zur Zeichenebene.

Das hier vereinfacht dargestellte Bremssystem umfasst am Vorderrad 17 und am Hinterrad 16 jeweils eine Scheibenbremse 30 mit einer Bremsscheibe 31, wie dies beim Stand der Technik an sich bekannt ist. Von jeder dieser Scheibenbremsen 30 führt ein Kabel 2 z.B. in Form eines Bowdenzuges oder einer Hydraulikleitung zum jeweiligen Bremshebel 21 am Lenker 20.

Im gezeigten Ausführungsbeispiel gemäß Fig. 1 ist nun das vom Bremshebel 21 zur hinteren Scheibenbremse 30 führende Kabel 2 erfindungsgemäß mittels eines Kabelführungskörpers 1 auf der Schwenkachse 6 bzw. hier konkret auf dem Achsbolzen 7 des Schwenkgelenks 8 befestigt. Dieses Schwenkgelenk 8 bildet das Hauptlager 32 zwischen dem Hauptrahmen 14 und der Kettenstrebe 33 des Hinterbaus 15. Der Vollständigkeit halber wird darauf hingewiesen, dass eine erfindungsgemäße Befestigung eines Kabels 2 mittels eines erfindungsgemäßen Kabelführungskörpers 1 auch an jedem der anderen Schwenkgelenke 8 bzw. deren Schwenkachsen 6 realisiert werden könnte.

Darüber hinaus muss es sich natürlich bei einem, mit einem erfindungsgemäß ausgeführten Kabelführungskörper 1 ausgestatteten Fahrrad 3 nicht unbedingt um ein Fahrrad 3 in der hier dargestellten Form handeln. Erfindungsgemäße Kabelführungskörper 1 können auch an beliebigen anderen Fahrrädern eingesetzt werden, bei denen ein Kabel 2 über ein Schwenkgelenk 8 geführt werden muss. Es wird in diesem Zusammenhang auf die obigen Erläuterungen zum Begriff des Fahrrades verwiesen.

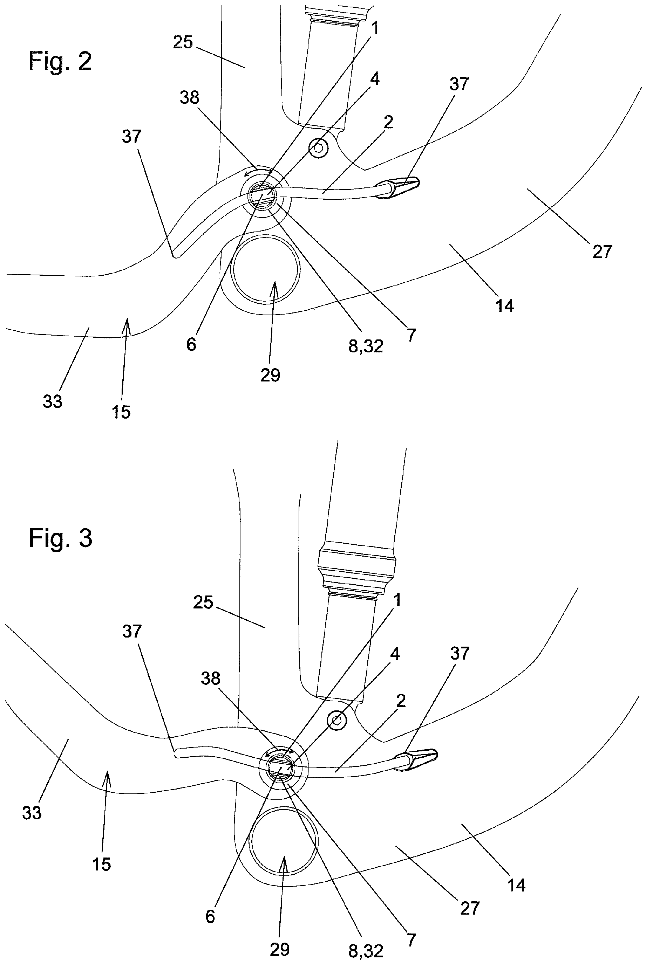

Die Fig. 2 und 3 zeigen nun den Bereich des Fahrrades gemäß Fig. 1 um das Hauptlager 32 herum, wobei die Kettenstrebe 33 des Hinterbaus 15 in Fig. 2 sich gegenüber dem Hauptrahmen 14 in ihrer Ausgangsstellung befindet. In Fig. 3 ist die Kettenstrebe 33 demgegenüber ausgelenkt, indem sie ein Stück weit um die Schwenkachse 6 des das Hauptlager 32 bildenden Schwenkgelenkes 8 ausgelenkt ist. In den Fig. 2 und 3 ist besonders gut zu sehen, wie das Kabel 2 an einer Kabelöffnung 37 im Unterrohr 27 des Hauptrahmens 14 aus diesem Rohr herausgeführt und an einer anderen Kabelöffnung 37 der Kettenstrebe 33 und damit des Hinterbaus 15 wieder in diese Kettenstrebe 33 hineingeführt wird. Im Bereich des Schwenkgelenkes 8 ist das Kabel erfindungsgemäß in der Kabelführungsöse 4 des Kabelführungskörpers 1 befestigt. Die Kabelführungsöse 4 steht nach außen über. Der Kabelführungskörper 1 ist samt Kabel 2 mittels des Befestigungsabschnitts 5 des Kabelführungskörpers 1 auf der Schwenkachse 6 des Schwenkgelenkes 8 befestigt. Wie in den nachfolgenden Ausführungsbeispielen gezeigt, ist hierzu günstigerweise vorgesehen, dass der Kabelführungskörper 1 mittels seines Befestigungsabschnitts 5 direkt auf dem Achsbolzen 7 der Schwenkachse 6 befestigt ist. Durch diese Maßnahme wird jedenfalls erreicht, dass das Kabel 2 mittels des Kabelführungskörpers 1 permanent über die Schwenkachse 6 geführt ist. Hierdurch kommt es auch nach einer Vielzahl von Verschwenkbewegungen im Hauptlager 32 zu keiner wesentlichen Abnutzung des Kabels 2, da dies bei den Schwenkbewegungen, wie sie beispielhaft in den Fig. 2 und 3 gezeigt sind, nicht übermäßig stark beansprucht wird. Hierzu ist in diesem wie auch in anderen erfindungsgemäßen Ausführungsbeispielen vorgesehen, dass das Kabel 2 mittels des Kabelführungskörpers 1 um dieselbe Schwenkachse 6 schwenkbar gelagert ist, um die auch die beiden Fahrradteile, hier der Hauptrahmen 14 und die Kettenstrebe 33 des Hinterbaus 15, relativ zueinander verschwenkbar sind. Konkret ist in diesem Ausführungsbeispiel wie auch in anderen bevorzugten Varianten vorgesehen, dass der Kabelführungskörper 1 mit seinem Befestigungsabschnitt 5 um die Schwenkachse 6 verschwenkbar ist. Dies ist gut an den beiden unterschiedlichen Stellungen der Kabelführungsöse 4 in den Fig. 2 und 3 zu erkennen. Die Schwenkrichtungen 38, in die die Schwenkachse 6 jeweils eine Schwenkbewegung zulässt, sind in den Fig. 2 und 3 durch einen entsprechenden Doppelpfeil angedeutet.

In allen hier gezeigten und nachfolgend beschriebenen Varianten ist der erfindungsgemäße Kabelführungskörper 1 mit seiner Kabelführungsöse 4 und seinem Befestigungsabschnitt 5 schwenkbar am Achsbolzen 7 des Schwenkgelenkes 8 befestigt. Kabelführungsöse 4 und Befestigungsabschnitt 5 sind dabei in den hier gezeigten Varianten einstückig und untereinander nicht verdrehbar miteinander verbunden. Wie bereits oben angedeutet, kann es aber auch Ausbildungsformen von erfindungsgemäßen Kabelführungskörpern 1 geben, bei denen die Kabelführungsöse 4 um die Schwenkachse 6 relativ zum Befestigungsabschnitt 5 drehbar ist.

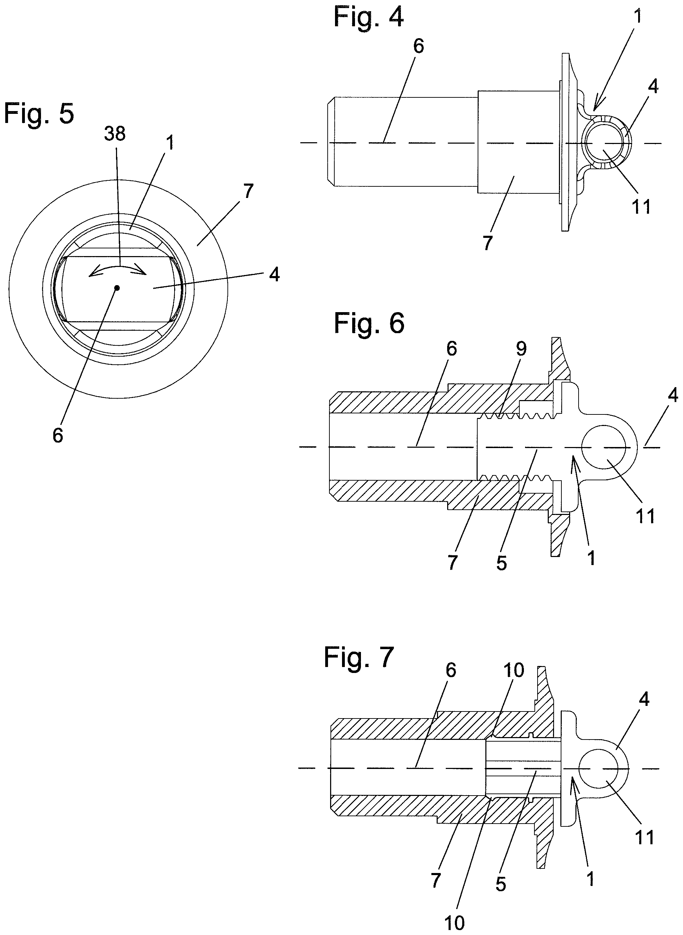

Fig. 4 zeigt nun den Achsbolzen 7 des Schwenkgelenks 8. Die Schwenkachse 6 ist strichliert eingezeichnet. Der Kabelführungskörper 1 ist mit seinem Befestigungsabschnitt 5 so im Achsbolzen 7 befestigt, dass nur noch die Kabelführungsöse 4 nach außen heraussteht. Gut zu sehen ist hier auch die Öffnung 11 der Kabelführungsöse 4, durch die das Kabel 2 hindurchgeführt werden kann. Fig. 5 zeigt eine Ansicht von außen entlang der Schwenkachse 6 auf die Anordnung von Kabelführungskörper 1 und Achsbolzen 7. Fig. 6 zeigt einen Schnitt durch eine erste Ausgestaltungsvariante in Form eines Längsschnitts durch den Achsbolzen 7 und den daran befestigten Kabelführungskörper 1. Gut zu sehen ist hier die einstückige Verbindung zwischen Kabelführungsöse 4 und Befestigungsabschnitt 5. In der Variante gemäß Fig. 6 trägt der Befestigungsabschnitt 5 ein Gewinde 9 in Form eines Außengewindes, welches in ein hier nicht explizit dargestelltes Innengewinde des Achsbolzens 7 eingreifen kann. Indem man diese Gewindeverbindung nicht ganz festschraubt, verbleibt eine Drehmöglichkeit für den Kabelführungskörper 1 im Achsbolzen 7 um die Schwenkachse 6, sodass die Kabelführungsöse 4 samt Befestigungsabschnitt 5 und damit der gesamte Kabelführungskörper 1 relativ zum Achsbolzen 7 in den Schwenkrichtungen 38 um die Schwenkachse 6 gedreht bzw. geschwenkt werden kann.

Fig. 7 zeigt eine Alternative hierzu, ebenfalls in einem Längsschnitt durch den Achsbolzen 7 und den Kabelführungskörper 1. In der Variante gemäß Fig. 7 weist der Befestigungsabschnitt 5 Rasten 10 auf, mit denen er im Achsbolzen 7 über eine Schnappverbindung befestigt ist. Auch diese Schnappverbindung kann so ausgestaltet sein, dass sie ein Drehen bzw. Verschwenken des Kabelführungskörpers 1 bzw. des Befestigungsabschnitts 5 um die Schwenkachse 6 relativ zum Achsbolzen 7 zulässt.

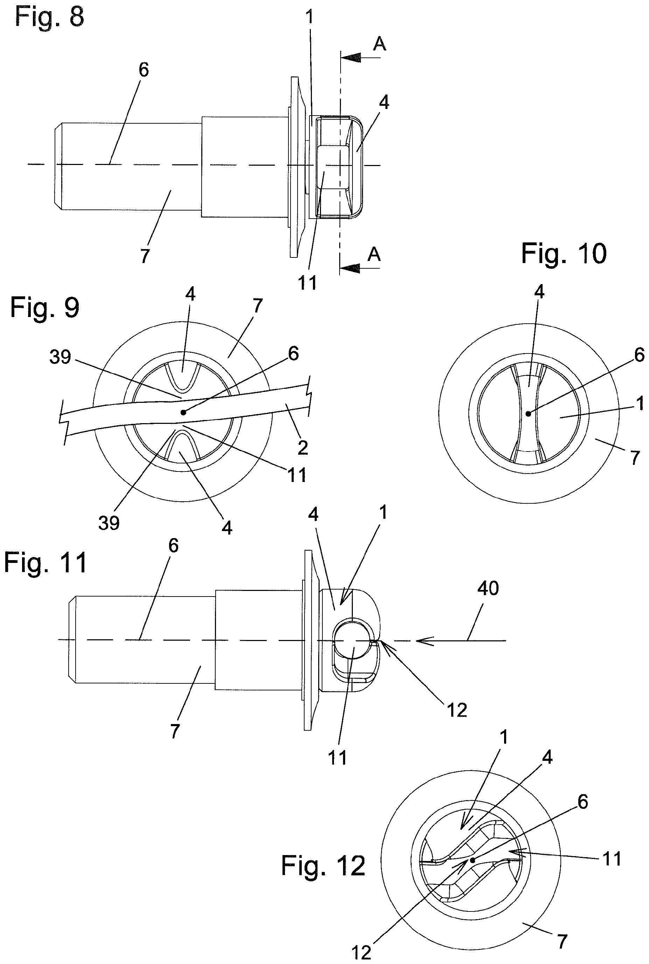

In den Fig. 8 bis 10 ist eine weitere Variante eines erfindungsgemäßen Kabelführungskörpers 1, welcher auf einem Achsbolzen 7 befestigt ist, gezeigt. Grundsätzlich könnte auch hier der Kabelführungskörper 1 um die Schwenkachse 6 relativ zum Achsbolzen 7 und drehbar bzw. schwenkbar gelagert sein. In der Variante gemäß der Fig. 8 bis 10 ist dies aber nicht nötig, da die Öffnung 11 der Kabelführungsöse 4, durch welche das Kabel 2 hindurchgeführt wird, durch die Aufweitungen 39 so viel Spiel besitzt, dass das Kabel 2 in der Kabelführungsöse 4 relativ zu dieser um die Schwenkachse 6 geschwenkt werden kann. Dies ist besonders gut in Fig. 9 angedeutet. Diese Figur zeigt den Schnitt entlang der Schnittlinie AA aus Fig. 8. Fig. 10 zeigt wiederum eine Draufsicht auf dieses Ausführungsbeispiel, gesehen entlang der Schwenkachse 6. Insbesondere bei solchen Ausgestaltungsformen könnte der Kabelführungskörper 1 also auch in einer geeigneten Art und Weise, z.B. durch einen Formschluss, ein Anschrauben oder dergleichen drehfest am Achsbolzen 7 oder in anderer Art und Weise auf der Schwenkachse 6 befestigt werden. Die Variante gemäß Fig. 8 bis 10 ist somit ein Beispiel für eine Ausgestaltungsform, bei der das Kabel 2 in der Kabelführungsöse 4 um die Schwenkachse 6 verschwenkbar gelagert ist.

Während bei den bislang gezeigten Ausführungsvarianten von Kabelführungskörpern 1 bzw. Kabelführungsösen 4 das Kabel 2 durch die Öffnung 11 der umfangsgeschlossenen Kabelführungsösen 4 hindurchgeschoben werden muss, zeigt die Ausgestaltungsform gemäß der Fig. 11 und 12 noch eine Variante, bei der die Kabelführungsöse 4 zumindest einen Einführschlitz 12 zum seitlichen Einführen des Kabels 2 in die Öffnung 11 aufweist. Wie in der Draufsicht gemäß Fig. 12 gut zu sehen ist, ist dieser Einführschlitz 12 bevorzugt abgewinkelt bzw. labyrinthartig ausgeführt. Er erlaubt es jedenfalls, dass das Kabel 2 seitlich aus Richtung 40 durch den Einführschlitz 12 hindurch in die Öffnung 11 eingeführt und dann anschließend dort gehalten wird. In dieser Variante ist die Kabelführungsöse 4 somit nicht umfangsgeschlossen. Bei solchen Varianten entfällt die Notwendigkeit, das ganze Kabel 2 durch die Öffnung 11 der Kabelführungsöse 4 hindurchzuschieben, um es entsprechend positionieren zu können. Dies bietet vor allem bei sehr langen Kabeln 2 einen Vorteil.

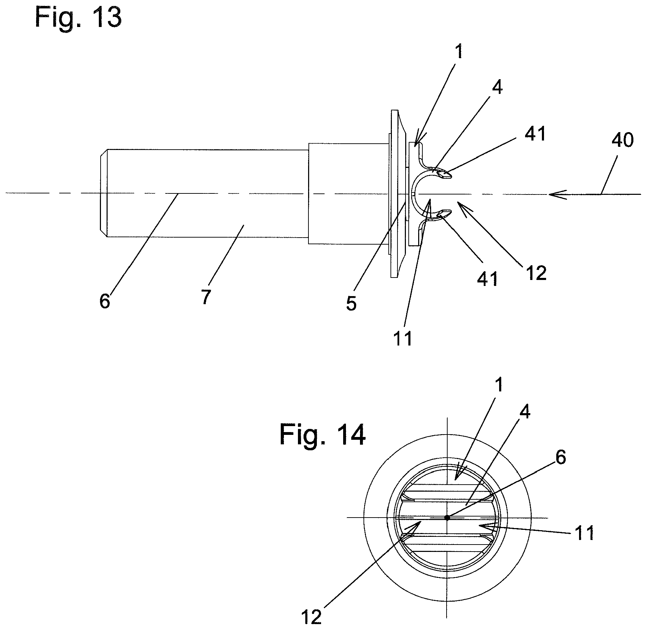

Das Ausführungsbeispiel gemäß der Fig. 13 und 14 zeigt beispielhaft eine Variante eines erfindungsgemäßen Kabelführungskörpers 1, bei der die Kabelführungsöse 4 als Clip ausgebildet ist. Im gezeigten Ausführungsbeispiel gemäß der Fig. 13 und 14 weist die Kabelführungsöse 4 hierzu einen Einführschlitz 12 auf, durch den das Kabel 2 seitlich aus Richtung 40 hindurch in die Öffnung 11 eingeführt werden kann. In diesem Ausführungsbeispiel wird das Kabel 2 dann klemmend in der Kabelführungsöse 4 gehalten. Diese weist im gezeigten Beispiel zwei Klemmbacken 41 auf, welche abgesehen von dem Einführschlitz 12, die Öffnung 11 umschließen. Zur klemmenden Befestigung des Kabels 2 zwischen den Klemmbacken 41 der Kabelführungsöse 4 können die Klemmbacken 41 elastisch in Richtung aufeinander zu vorgespannt sein. Es kann sich aber auch um starre Klemmbacken 41 handeln. In diesem Fall kann die zur Klemmung benötigte Elastizität durch das Kabel 2, z.B. durch einen entsprechenden Elastomermantel des Kabels 2, erreicht werden. Es ist dabei möglich, diese beiden genannten Maßnahmen in Kombination oder einzeln zu nutzen, um das Kabel 2 klemmend zwischen den Klemmbacken 41 zu befestigen. Der Befestigungsabschnitt 5 des Kabelführungskörpers 1 kann in allen oben erwähnten Varianten im Achsbolzen 7 befestigt sein. Bevorzugt ist der Kabelführungskörper 1 mit der Kabelführungsöse 4 um die Schwenkachse 6 schwenkbar. Bei einer entsprechenden Ausgestaltung der Klemmbacken 41 bzw. der Kabelführungsöse 4 kann auf diese Schwenkbarkeit aber eventuell auch verzichtet werden.

**Legende zu den Hinweisziffern:**

| | | | |
|---|---|---|---|
| | | 21 | Bremshebel |
| 1 | Kabelführungskörper | 22 | Steuerrohr |
| 2 | Kabel | 23 | Sattelstütze |
| 3 | Fahrrad | 24 | Sattel |
| 4 | Kabelführungsöse | 25 | Sitzrohr |
| 5 | Befestigungsabschnitt | 26 | Oberrohr |
| 6 | Schwenkachse | 27 | Unterrohr |
| 7 | Achsbolzen | 28 | Feder- Dämpfer- Kombination |
| 8 | Schwenkgelenk | 29 | Tretlagergehäuse |
| 9 | Gewinde | 30 | Scheibenbremse |
| 10 | Raste | 31 | Bremsscheibe |
| 11 | Öffnung | 32 | Hauptlager |
| 12 | Einführschlitz | 33 | Kettenstrebe |
| 13 | Fahrradrahmen | 34 | Sitzstrebe |
| 14 | Hauptrahmen | 35 | Wippe |
| 15 | Hinterbau | 36 | Wippenhauptlager |
| 16 | Hinterrad | 37 | Kabelöffnung |
| 17 | Vorderrad | 38 | Schwenkrichtung |
| 18 | Vorderbau | 39 | Aufweitung |
| 19 | Gabel | 40 | Richtung |
| 20 | Lenker | 41 | Klemmbacken |

## Patentansprüche

1. Fahrrad (3) mit zumindest zwei Rahmenteilen eines Fahrradrahmens (13) des Fahrrades (3), wobei eines der Rahmenteile ein Hauptrahmen (14) des Fahrrades (3) und eines der Rahmenteile ein Hinterbau (15) des Fahrrades (3) zur Aufnahme eines Hinterrades (16) des Fahrrades (3) ist, wobei der Hauptrahmen (14) ein Sitzrohr (25) zum Einführen einer Sattelstütze (23) und ein Steuerrohr (22) zum Befestigen einer Gabel (19) für das Vorderrad und eines Lenkers (20) am Hauptrahmen (14) aufweist, oder beide Rahmenteile Teile des Hinterbaus (15) des Fahrrades (3) zur Aufnahme des Hinterrades (16) des Fahrrades (3) sind und die Rahmenteile über zumindest eine Schwenkachse (6) zumindest eines Schwenkgelenks (8) des Fahrrades (3) schwenkbar miteinander verbunden sind, wobei das Fahrrad (3) zumindest ein Kabel (2) und zumindest einen Kabelführungskörper (1) zur Befestigung des Kabels (2) an dem Fahrrad (3) aufweist, **dadurch gekennzeichnet, dass** der Kabelführungskörper (1) zumindest eine Kabelführungsöse (4) zum Befestigen des Kabels (2) am Kabelführungskörper (1) und zumindest einen Befestigungsabschnitt (5) zur Befestigung des Kabelführungskörpers (1) auf einer Schwenkachse (6) an einem Achsbolzen (7) eines Schwenkgelenkes (8) des Fahrrades (3) aufweist, wobei das Kabel (2) in der Kabelführungsöse (4) des Kabelführungskörpers (1) befestigt ist und der Kabelführungskörper (1) samt Kabel (2) mittels des Befestigungsabschnitts (5) des Kabelführungskörpers (1) auf der Schwenkachse (6) an dem Achsbolzen (7) des Schwenkgelenkes (8) befestigt ist.

2. Fahrrad (3) nach Anspruch 1, **dadurch gekennzeichnet, dass** der Befestigungsabschnitt (5) ein Gewinde (9) aufweist oder zumindest eine Raste (10) zur Ausbildung einer Schnappverbindung mit dem Achsbolzen (7).

3. Fahrrad (3) nach Anspruch 1 oder 2, **dadurch gekennzeichnet, dass** die Kabelführungsöse (4) zumindest eine Öffnung (11) zum Hindurchführen des Kabels (2) umfangsgeschlossen umgibt oder dass die Kabelführungsöse (4) zumindest einen Einführschlitz (12) zum seitlichen Einführen des Kabels (2) in die Öffnung (11) aufweist.

4. Fahrrad (3) nach einem der Ansprüche 1 bis 3, **dadurch gekennzeichnet, dass** die Kabelführungsöse (4) nach außen übersteht.

5. Fahrrad (3) nach einem der Ansprüche 1 bis 4, **dadurch gekennzeichnet, dass** das Kabel (2) mittels des Kabelführungskörpers (1) um die Schwenkachse (6), um die die beiden Rahmenteile relativ zueinander verschwenkbar sind, verschwenkbar gelagert ist.

6. Fahrrad (3) nach einem der Ansprüche 1 bis 5, **dadurch gekennzeichnet, dass** der Kabelführungskörper (1) mit seinem Befestigungsabschnitt (5) um die Schwenkachse (6), um die die beiden Rahmenteile relativ zueinander verschwenkbar sind, verschwenkbar gelagert ist.

7. Fahrrad (3) nach einem der Ansprüche 1 bis 6, **dadurch gekennzeichnet, dass** das Kabel (2) in oder mit der Kabelführungsöse (4) um die Schwenkachse (6), um die die beiden Rahmenteile relativ zueinander verschwenkbar sind, verschwenkbar gelagert ist.

## Claims

1. A bicycle (3) having at least two frame parts of a bicycle frame (13) of the bicycle (3), wherein one of the frame parts is a main frame (14) of the bicycle (3) and one of the frame parts is a rear triangle (15) of the bicycle (3) to receive a rear wheel (16) of the bicycle (3), wherein the main frame (14) has a seat tube (25), for the introduction of a seat post (23), and a head tube (22) for the securing to the main frame (14) of both a fork (19) for the front wheel and a handlebar (20), or both frame parts are parts of the rear triangle (15) of the bicycle (3) to receive the rear wheel (16) of the bicycle (3) and the frame parts are pivotably connected to one another via at least one pivot axis (6) of at least one pivot articulation (8) of the bicycle (3), wherein the bicycle (3) has at least one cable (2) and at least one cable guide body (1) for securing the cable (2) to the bicycle (3), **characterized in that** the cable guide body (1) has at least one cable guide eye (4) to secure the cable (2) to the cable guide body (1) and at least one securing portion (5) to secure the cable guide body (1) on a pivot axis (6) to an axle bolt (7) of a pivot articulation (8) of the bicycle (3), wherein the cable (2) is secured in the cable guide eye (4) of the cable guide body (1) and the cable guide body (1) together with cable (2) is secured on the pivot axis (6) to the axle bolt (7) of the pivot articulation (8) by means of the securing portion (5) of the cable guide body (1).

2. A bicycle (3) according to claim 1, **characterized in that** the securing portion (5) has a thread (9) or at least one catch (10) to form a snap-action connection with the axle bolt (7).

3. A bicycle (3) according to claim 1 or 2, **characterized in that** the cable guide eye (4) surrounds in a circumferentially-closed manner at least one opening (11) for the passage of the cable (2) or **in that** the cable guide eye (4) has at least one insertion slot (12) for the lateral insertion of the cable (2) into the opening (11).

4. A bicycle (3) according to any one of claims 1 to 3, **characterized in that** the cable guide eye (4) projects outwards.

5. A bicycle (3) according to any one of claims 1 to 4, **characterized in that** the cable (2) is pivotably mounted, by means of the cable guide body (1), about the pivot axis (6) about which the two frame parts are pivotable relative to one another.

6. A bicycle (3) according to any one of claims 1 to 5, **characterised in that** the cable guide body (1) is pivotably mounted, with its securing portion (5), about the pivot axis (6) about which the two frame parts are pivotable relative to one another.

7. A bicycle (3) according to any one of claims 1 to 6, **characterized in that** the cable (2) is pivotably mounted, in or with the cable guide eye (4), about the pivot axis (6) about which the two frame part are pivotable relative to one another.

## Revendications

1. Vélo (3) avec un cadre de vélo (13) du vélo (3) en au moins deux parties de cadre, dans lequel une des parties de cadre est un cadre principal (14) du vélo (3) et une des parties de cadre est un cadre arrière (15) du vélo (3) pour recevoir une roue arrière (16) du vélo (3), le cadre principal (14) comprenant un tube de selle (25) pour insérer une tige de selle (23) et un tube de direction (22) pour fixer au cadre principal (14) une fourche (19) pour la roue avant et un guidon (20), ou les deux parties de cadre sont des parties du cadre arrière (15) du vélo (3) pour recevoir la roue arrière (16) du vélo (3), et les parties de cadre sont reliées de manière pivotante l'une à l'autre par au moins un axe de pivotement (6) d'au moins une articulation pivotante (8) du vélo (3), le vélo (3) étant muni d'au moins un câble (2) et d'au moins un corps de guidage de câble (1) pour fixer le câble (2) au vélo (3), **caractérisé en ce que** le corps de guidage de câble (1) est muni d'au moins un œillet de guidage de câble (4) pour fixer le câble (2) au corps de guidage de câble (1) et d'au moins une section de fixation (5) pour fixer le corps de guidage de câble (1) sur un axe de pivotement (6) d'un axe (7) d'une articulation pivotante (8) du vélo (3), le câble (2) étant fixé dans l'œillet de guidage de câble (4) du corps de guidage de câble (1), et le corps de guidage de câble (1) étant fixé avec le câble (2) au moyen de la section de fixation (5) du corps de guidage de câble (1) sur l'axe de pivotement (6) de l'axe (7) de l'articulation pivotante (8).

2. Vélo (3) selon la revendication 1, **caractérisée en ce que** la section de fixation (5) est munie d'un filetage (9) ou d'au moins un cliquet (10) pour former une liaison par encliquetage avec l'axe (7).

3. Vélo (3) selon la revendication 1 ou 2, **caractérisé en ce que** l'œillet de guidage de câble (4) entoure de manière fermée sur la circonférence au moins une ouverture (11) pour le passage du câble (2), ou **en ce que** l'œillet de guidage de câble (4) est muni d'au moins une fente d'insertion (12) pour insérer latéralement le câble (2) dans l'ouverture (11).

4. Vélo (3) selon l'une des revendications 1 à 3, **caractérisé en ce que** l'œillet de guidage de câble (4) saille vers l'extérieur.

5. Vélo (3) selon l'une des revendications 1 à 4, **caractérisé en ce que** le câble (2) est monté au moyen du corps de guidage de câble (1) de sorte à pouvoir pivoter autour de l'axe de pivotement (6) autour duquel les deux parties du cadre peuvent pivoter l'une par rapport à l'autre.

6. Vélo (3) selon l'une des revendications 1 à 5, **caractérisé en ce que** le corps de guidage de câble (1) est monté avec sa section de fixation (5) de manière à pouvoir pivoter autour de l'axe de pivotement (6) autour duquel les deux parties du cadre peuvent pivoter l'une par rapport à l'autre.

7. Vélo (3) selon l'une des revendications 1 à 6, **caractérisé en ce que** le câble (2) est monté dans ou avec l'œillet de guidage de câble (4) de manière à pouvoir pivoter autour de l'axe de pivotement (6) autour duquel les deux parties du cadre peuvent pivoter l'une par rapport à l'autre.
